# EUROPÄISCHE PATENTANMELDUNG

(11) **EP 4 534 798 A1**
(43) Veröffentlichungstag der Anmeldung: **09.04.2025**
(21) Anmeldenummer: 24195957.6
(22) Anmeldetag: 22.08.2024
(51) Int. Cl.: F01D 5/14

(54) **BESCHAUFELUNG FÜR EINE TURBOMASCHINE, SOWIE TURBOMASCHINE**

(30) Priorität: 27.09.2023 DE 102023126341
(71) Anmelder: MTU Aero Engines AG, 80995 München (DE)
(72) Erfinder: Wunderer, Roland, 80995 München (DE)

(57) **Zusammenfassung**

Die Erfindung betrifft eine Beschaufelung (21) für eine Turbomaschine, sowie eine Turbomaschine, welche verbesserte Strömungseigenschaften aufweisen. Die Beschaufelung (21) weist eine Seitenwand (1) auf, an welcher eine Vielzahl von Schaufeln nebeneinander ausgebildet sind, wobei jeweils eine Schaufel (20) der Vielzahl von Schaufeln eine Eintrittskante (2), eine Austrittskante (3), eine Profiltiefe (c), eine Druckseite (4) und eine Saugseite (5) aufweist, wobei die Seitenwand (1) zwischen benachbarten Schaufeln (20) in einem Bereich (6) der Druckseite (4) eine Aufdickung (11) und in einem Bereich (7) der Saugseite (5) eine erste Aufdickung (10) aufweist. Die erste Aufdickung (10) beginnt hierbei erst ab zumindest 10 % der Profiltiefe (c) entfernt von der Eintrittskante (2).

## Beschreibung

Die Erfindung betrifft eine Beschaufelung für eine Turbomaschine nach dem Oberbegriff des Anspruchs 1 und eine zugehörige Turbomaschine, insbesondere eine Gasturbine.

Eine Schaufelpassage einer Turbomaschine wird allgemein durch eine naben- und eine gehäuseseitige Seitenwand sowie dazwischen angeordnete Leit- oder Laufschaufeln definiert, wobei die Seitenwände jeweils naben- oder gehäusefest sein können. In den Schaufelpassagen können sich durch den Einfluss der Wandreibung im Bereich der Seitenwände teilweise stark ausgeprägte Sekundärströmungen ergeben. Diese Sekundärströmungen verursachen erhöhte Verluste.

Ein bedeutender Anteil der Strömungsverluste in einer Turbomaschine wird in den Schaufelpassagen im Bereich der Seitenwände erzeugt. Dieser Bereich ist dominiert von Sekundärströmungen. Maßnahmen, diese Verluste zu reduzieren, sind einerseits 3D-Formgebungen der Schaufeln nahe der Seitenwände und andererseits die Verformung der Seitenwände selbst, im Bereich zwischen in Umfangsrichtung benachbarten Schaufeln. Beide Maßnahmen sollen die Strömungsführung im Bereich der Seitenwände verbessern, dadurch die Sekundärströmung und damit die Strömungsverluste reduzieren.

Es gibt mittlerweile verschiedenste Lösungen zur Formgebung von Seitenwänden in Turbomaschinen. Es ist aber nach wie vor sehr anspruchsvoll, individuelle Lösungen finden, die sowohl zu einer maximalen Verlustreduzierung im Auslegungspunkt der Turbomaschine führen, als auch in Betriebsbereichen abseits der Auslegung (Offdesign) gut funktionieren, bzw. dort keine negativen Auswirkungen auf die Strömung in der Turbomaschine haben. Es besteht erheblicher Bedarf, die Formgebung von Seitenwänden weiter zu verbessern.

Die US 9,963,973 B2, sowie die EP 2 631 429 B1 offenbaren eine Beschaufelung für eine Turbomaschine mit einer Seitenwand, welche eine Absenkung an einer Druckseite der Schaufel und eine Aufdickung an einer Saugseite der Schaufel aufweist.

Die US 7,134,842 B2 beschreibt eine Seitenwand mit einer Ausbuchtung an der Druckseite und eine Vertiefung an der Saugseite. Die US 9,140,128 B2 zeigt eine Senke in der Seitenwand mittig zwischen zwei Schaufeln, sowie eine Erhöhung an der Eintrittskante der Schaufel.

Der Erfindung liegt die Aufgabe zugrunde, eine verbesserte Beschaufelung für eine Turbomaschine, sowie eine verbesserte Turbomaschine bereitzustellen.

Die Aufgabe wird durch die Gegenstände der unabhängigen Patentansprüche gelöst. Vorteilhafte Weiterbildungen der Erfindung sind durch die abhängigen Patentansprüche, die folgende Beschreibung sowie die Figuren beschrieben.

Durch einen ersten Aspekt der Erfindung ist eine Beschaufelung für eine Turbomaschine bereitgestellt. Die Beschaufelung weist zumindest eine Seitenwand auf, an welcher eine Vielzahl von Schaufeln, insbesondere in Umfangsrichtung, nebeneinander ausgebildet sind. Jeweils eine Schaufel der Vielzahl von Schaufeln definiert insbesondere eine Eintrittskante, eine Austrittskante, eine Profilsehne, eine Druckseite und eine Saugseite. Die Seitenwand zwischen benachbarten Schaufeln weisen insbesondere in einem Bereich der Druckseite eine Absenkung und in einem Bereich der Saugseite eine erste Aufdickung auf. Die erste Aufdickung beginnt insbesondere erst ab zumindest 10 % der Profiltiefe entfernt von der Eintrittskante.

Durch dieses gezielte und kombinierte Anbringen von Aufdickungen und Vertiefungen der Seitenwand in den Bereichen der Druck- bzw. Saugseite, wobei die erste Aufdickung erst ab zumindest 10 % der Profiltiefe beginnt, hat es sich gezeigt, dass eine vorteilhafte lokale Anpassung des statischen Druckes und der Strömungsgeschwindigkeit erreicht werden kann, wodurch die Sekundärströmungen vorteilhaft beeinflusst und die Strömungsverluste verringert werden können. Neben der Verlustverringerung in den Schaufelkanälen über einen großen Betriebsbereich der Turbomaschinen kann ein weiterer Vorteil dieser Ausgestaltung auch in einer Vergrößerung des Betriebsbereichs der Turbomaschinen liegen. Ein Vorteil kann auch in einer einfachen konstruktiven Umsetzung und/oder der Anwendbarkeit für bereits bestehende Auslegungen von Turbomaschinen liegen.

Als Beschaufelung im Sinne der vorliegenden Erfindung wird insbesondere eine Anordnung von Laufschaufeln und/oder eine Anordnung von Leitschaufeln, insbesondere einer oder mehrerer Stufen, bezeichnet. Eine erfindungsgemäße Beschaufelung ist besonders für Verdichter, insbesondere Hochdruckverdichter, als auch für Turbinen geeignet.

Eine Seitenwand im Sinne der vorliegenden Erfindung kann naben- bzw. rotor- und/oder gehäuseseitig sowie naben- bzw. rotor- und/oder gehäusefest sein. So kann eine Seitenwand die radial innere Umfangsfläche eines Laufgitters, und/oder die radial äußere Umfangsfläche eines Laufgitters umfassen. Insbesondere können die Umfangsflächen durch ein nabenfestes Deckband oder eine gehäusefeste Innenfläche gebildet sein. Gleichermaßen kann eine Seitenwand die gehäuseseitige, radial äußere Umfangsfläche und/oder die nabenseitige Umfangsfläche eines Leitgitters umfassen, die insbesondere durch ein gehäusefestes Deckband oder eine nabenfeste Außenfläche gebildet sein kann.

Unter einer Vertiefung im Sinne der vorliegenden Erfindung wird insbesondere ein Bereich der Seitenwand verstanden, der in Bezug zu anderen Bereichen der Seitenwand radial in die Seitenwand versetzt ist, während unter einer Aufdickung bzw. Erhöhung im Sinne der vorliegenden Erfindung insbesondere ein Bereich der Seitenwand verstanden wird, der in Bezug zu anderen Bereichen der Seitenwand radial aus der Seitenwand hervorsteht. Eine Vertiefung bzw. Aufdickung im Sinne der vorliegenden Erfindung kann insbesondere in Bezug zu einer, insbesondere geraden oder gekrümmten, Bezugskegelfläche radial nach innen bzw. außen zurück- bzw. überstehen, die konzentrisch zu einer Rotationsachse liegt. Die Bezugskegelfläche kann insbesondere durch die radial innersten oder radial äußersten Punkte der Seitenwand oder dazwischen verlaufen. Insbesondere kann ein Radius der Bezugskegelfläche dem Mittelwert der maximalen und minimalen oder aller radialen Erstreckungen der Seitenwand entsprechen. Weiterhin kann sich die Vertiefung bzw. Aufdickung auch auf eine Bezugskegelfläche beziehen, die durch einen Bereich der Seitenwand oder einen Fuß oder eine Spitze der Schaufeln verläuft.

Unter einer Aufdickung im Sinne der vorliegenden Erfindung kann insbesondere eine Erhöhung im Vergleich zu der Vertiefung verstanden werden, unter einer Vertiefung entsprechend eine Absenkung im Vergleich zu der Aufdickung. Mit anderen Worten wird durch die Aufdickung eine Schaufelpassage zwischen zwei benachbarten Schaufeln verengt, sowie durch eine Absenkung erweitert.

Aus Sicht von innerhalb des durchströmten Kanals ist die Aufdickung nach innen gehend. Eine nabenseitige Aufdickung erstreckt sich somit radial positiv, und eine gehäuseseitige Aufdickung radial negativ aus der Seitenwand. Aus Sicht von innerhalb des durchströmten Kanals ist die Absenkung nach außen gehend. Eine nabenseitige Absenkung erstreckt sich somit radial negativ, und eine gehäuseseitige Absenkung radial positiv aus der Seitenwand.

Beispielsweise kann eine Absenkung durch Abtragen von Material von der Seitenwandoberfläche erfolgen, beispielsweise mittels einer Fräse. Beispielsweise kann eine Aufdickung durch Auftragen von Material auf eine Seitenwandoberfläche erfolgen.

Denkt man sich beispielsweise eine in Umfangsrichtung sinusförmig gewellte Seitenwand, so stellen die Berge bzw. Täler Aufdickungen bzw. Vertiefungen im Sinne der vorliegenden Erfindung gegenüber der Mittellinie dar. Gleichermaßen kann man von einer Bezugskegelfläche durch die radial maximalen oder minimalen Amplituden der sinusförmig gewellten Seitenwand ausgehen. Auch dann stellen die Täler (Berge) Vertiefungen (Aufdickungen) relativ zu dieser Bezugskegelfläche dar, die Berge (Täler) Aufdickungen (Vertiefungen), da sie demgegenüber radial weiter außen (innen) liegen.

Unter benachbarten Schaufeln sind insbesondere solche zu verstehen, die in der Umfangsrichtung benachbart zueinander ausgebildet sind. Insbesondere ist jeweils eine Druckseite einer ersten Schaufel einer Saugseite einer benachbarten, zweiten Schaufel zugekehrt. Insbesondere in der Seitenwand zwischen der Druckseite der ersten Schaufel und der Saugseite der zweiten Schaufel ist sowohl der Bereich der ersten Aufdickung, als auch der Bereich der Absenkung ausgebildet. Beispielsweise können die Bereiche aneinander angrenzen bzw. ineinander übergehen.

Der Bereich der Druckseite ist insbesondere als ein Bereich auf der Seitenwand zu verstehen, der zwischen benachbarten Schaufeln der Druckseite der jeweiligen Schaufel zugeordnet werden kann bzw. an der Druckseite angrenzt. Der Bereich der Saugseite ist insbesondere als ein Bereich auf der Seitenwand zu verstehen, der zwischen benachbarten Schaufeln der Saugseite der jeweiligen Schaufel zugeordnet werden kann bzw. an der Saugseite angrenzt.

Eine Profilsehne der jeweiligen Schaufel stellt insbesondere die gedachte Verbindungslinie zwischen der stromauf befindlichen Eintrittskante bzw. Profilnase und der stromab gerichteten Austrittskante bzw. Profilhinterkante dar. Die Profiltiefe kann insbesondere der Länge der Profilsehne entsprechen. Prozentangaben in Bezug auf die Profiltiefe können insbesondere Positionsangaben in axialer Richtung bzw. in Richtung der Profilsehne entsprechen. Beispielsweise entspricht 0 % der Profiltiefe der axialen Position der Eintrittskante, 100 % der Profiltiefe der axialen Position der Austrittskante, und 50 % eine axiale Position mittig zwischen der Eintrittskante und Austrittskante.

Die erste Aufdickung beginnt vorzugsweise erst ab zumindest 10 % der Profiltiefe. Mit anderen Worten ist der Beginn der ersten Aufdickung zumindest 10 % einer Länge der Profiltiefe in axialer Richtung von der Eintrittskante entfernt. In bevorzugten Ausführungsvarianten beginnt die erste Aufdickung erst ab zumindest 15 %, 20 %, 25 %, 30 %, 35 %, 40 %, 45 % oder 50 % der Profiltiefe. Die erste Aufdickung erstreckt sich dabei von dieser Beginnposition im Wesentlichen stromab. Alternativ kann die Aufdickung bereits ab 5 % der Profiltiefe beginnen.

Bevorzugt erstreckt sich die Vertiefung bzw. erste Aufdickung über eine axiale Länge von wenigstens 10%, vorzugsweise wenigstens 30%, insbesondere wenigstens 50 %, 60%, 70 % 80 %, 90 %, 100 %, oder mehr als 100 %, insbesondere bis zu 130 % einer Länge der Profiltiefe.

Eine Ausführungsform sieht vor, dass eine Erstreckung der Absenkung der Seitenwand größer ist als eine Erstreckung der ersten Aufdickung. Dadurch hat sich gezeigt, dass die Sekundärströmungen vorteilhaft beeinflusst und die Strömungsverluste verringert werden können. Insbesondere ist eine axiale Erstreckung der Absenkung auf der Seitenwand größer als eine axiale Erstreckung der ersten Aufdickung, und/oder eine Erstreckung in Umfangsrichtung der Absenkung auf der Seitenwand größer als eine Erstreckung in Umfangsrichtung der ersten Aufdickung

Eine Ausführungsform sieht vor, dass eine maximale, radiale Tiefe der Absenkung in die Seitenwand größer ist als eine maximale, radiale Höhe der ersten Aufdickung auf der Seitenwand. Dadurch hat sich gezeigt, dass die Sekundärströmungen vorteilhaft beeinflusst und die Strömungsverluste verringert werden können.

Eine Ausführungsform sieht vor, dass die Absenkung stromauf der Eintrittskante beginnt. Dadurch hat sich gezeigt, dass die Sekundärströmungen vorteilhaft beeinflusst und die Strömungsverluste verringert werden können.

Vorzugsweise beginnt die Absenkung zumindest 5 %, 10 %, 15 %, 20 % oder 25 % einer Länge der Profiltiefe stromauf der Eintrittskante. Die Abdeckung erstreckt sich dabei von dieser Beginnposition im Wesentlichen stromab.

Eine alternative Ausführungsform sieht vor, dass die Absenkung ab 0 % der Profiltiefe, also auf axialer Position der Eintrittskante, oder stromab der Eintrittskante beginnt, oder beispielsweise bei 5 % oder 10 % der Profiltiefe.

Eine Ausführungsform sieht vor, dass eine maximale Breite der Absenkung zumindest 60 % einer Breite einer Schaufelpassage zwischen benachbarten Schaufeln entspricht. Dadurch hat sich gezeigt, dass die Sekundärströmungen vorteilhaft beeinflusst und die Strömungsverluste verringert werden können. Die maximale Breite kann auch zumindest 65 %, 70 %, 75 % oder 80 % der Breite der Schaufelpassage entsprechen.

Die Schaufelpassage kann auch als Durchflusskanal für das strömende Gas der Turbomaschine bezeichnet werden, welche im Wesentlichen eine gekrümmte Form, aber eine im Wesentlichen konstante Breite aufweisen kann. Die Breite kann sich insbesondere im Umfangsrichtung erstrecken.

Eine Ausführungsform sieht vor, dass die Seitenwand eine zweite Aufdickung aufweist, welche stromauf der Eintrittskante angeordnet ist. Dadurch hat sich gezeigt, dass die Sekundärströmungen vorteilhaft beeinflusst und die Strömungsverluste verringert werden können.

Eine Ausführungsform sieht vor, dass die zweite Aufdickung zwischen zwei benachbarten Absenkungen angeordnet ist, insbesondere wenn die Absenkung benachbarter Schaufeln stromauf der Eintrittskante beginnt. Dadurch hat sich gezeigt, dass die Sekundärströmungen vorteilhaft beeinflusst und die Strömungsverluste verringert werden können.

Die zweite Aufdickung kann auch als eine weniger starke Absenkung verstanden werden als die benachbarten Absenkungen. Mit anderen Worten kann die zweite Aufdickung lediglich eine Aufdickung in Bezug zu den benachbarten Absenkungen darstellen. Dabei ist nicht ausgeschlossen, dass die zweite Aufdickung in Bezug zu der Bezugskegelfläche eine Absenkung sein kann.

Eine Ausführungsform der zweiten Aufdickung sieht vor, dass ein Maximum der zweiten Aufdickung zumindest näherungsweise an einer gedachten Tangente bzw. eine gedachte Verlängerung stromauf einer Schaufelskeletlinie der Schaufel angeordnet ist. Dadurch hat sich gezeigt, dass die Sekundärströmungen vorteilhaft beeinflusst und die Strömungsverluste verringert werden können.

Vorzugsweise kann ein Maximum der Höhe der zweiten Aufdickung beabstandet zu der Eintrittskante sein, beispielsweise in Form einer Beule vor der Eintrittskante.

Eine Ausführungsform sieht vor, dass eine maximale Tiefe der Absenkung zwischen 20 % und 60 % der Breite des Durchflusskanals zwischen benachbarten Schaufeln von der Druckseite entfernt ist, vorzugsweise zwischen 20 % und 50 %, 20 % und 40 %, oder 20 % und 30 %, bzw. zwischen 30 % und 60 %, 40 % und 60 %, oder 50 % und 60 %. Dadurch hat sich gezeigt, dass die Sekundärströmungen vorteilhaft beeinflusst und die Strömungsverluste verringert werden können. Die Absenkung in der Nähe der Druckseite kann somit vorzugsweise weniger stark ausgeprägt sein als in einem entfernteren Bereich der Druckseite bzw. als zwischen den Schaufeln.

Eine Ausführungsform sieht vor, dass eine maximale Tiefe der Absenkung in einem Bereich von 20 % bis 65 % der Profilsehne zwischen benachbarten Schaufeln von der Druckseite liegt, vorzugsweise zwischen 20 % und 50 %, 20 % und 40 %, oder 20 % und 30 %, bzw. zwischen 25 % und 65 %, 35 % und 65 %, 45 % und 65 %, oder 55 % und 65 %. Dadurch hat sich gezeigt, dass die Sekundärströmungen vorteilhaft beeinflusst und die Strömungsverluste verringert werden können.

Eine Ausführungsform sieht vor, dass die Vielzahl von Schaufeln Rotoren bzw. Laufschaufeln sind. Eine alternative Ausführungsform sieht vor, dass die Vielzahl von Schaufeln Statoren bzw. Leitschaufeln sind.

Eine Ausführungsform sieht vor, dass die Vielzahl von Schaufeln Verdichterschaufeln für eine Turbomaschine sind. Eine alternative Ausführungsform sieht vor, dass die Vielzahl von Schaufeln Turbinenschaufeln für eine Turbomaschine sind.

Eine Ausführungsform sieht vor, dass die Vielzahl von Schaufeln Schaufelfillets aufweisen. Ebenso kann es vorgesehen sein, dass die Vielzahl von Schaufeln keine Schaufelfillets aufweisen. Insbesondere erweisen sich die genannten Ausführungsformen der Beschaufelung als vorteilhaft für Schaufeln sowohl mit Schaufelfillets als auch ohne Schaufelfillets.

Als Schaufelfillets werden Körper mit Verbindungsflächen zwischen der Seitenwand und der Schaufel bezeichnet, die einen Ausrundungsradius aufweisen, sodass keine Kante zwischen Seitenwand und der Schaufel ausgebildet ist.

Durch einen zweiten Aspekt der Erfindung ist eine Turbomaschine bereitgestellt, die zumindest eine erfindungsgemäße Beschaufelung aufweist.

Ein weiterer Aspekt der Erfindung ist ein zerspanendes Fertigungsverfahren zur Herstellung der erfindungsgemäßen Beschaufelung, sowie ein additives Fertigungsverfahren zur Herstellung der erfindungsgemäßen Beschaufelung.

Im Folgenden ist sind Ausführungsbeispiele der Erfindung beschrieben. Hierzu zeigt:
- FIG. 1: eine perspektivische Darstellung eines Ausführungsbeispiels einer erfindungsgemäßen Beschaufelung;
- FIG. 2: ein Höhenliniendiagramm einer Konturierung einer Seitenwand gemäß einem ersten Ausführungsbeispiel;
- FIG. 3: ein Höhenliniendiagramm einer Konturierung einer Seitenwand gemäß einem zweiten Ausführungsbeispiel;
- FIG. 4: ein Höhenliniendiagramm einer Konturierung einer Seitenwand gemäß einem dritten Ausführungsbeispiel.

Bei dem im Folgenden erläuterten Ausführungsbeispielen handelt es sich um eine bevorzugte Ausführungsform der Erfindung. Bei den Ausführungsbeispielen stellen die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar. Merkmale der verschiedenen Ausführungsbeispiele können insbesondere miteinander kombiniert werden.

In den Figuren bezeichnen gleiche Bezugszeichen jeweils funktionsgleiche Elemente.

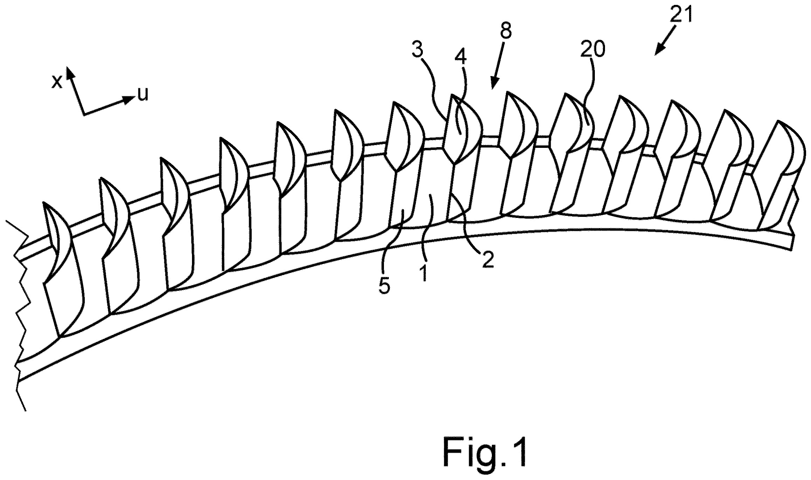

FIG. 1 zeigt eine perspektivische Darstellung einer Beschaufelung 21. insbesondere für eine Turbomaschine, mit einer nabenseitigen Seitenwand 1 bei einem Verdichter-Statorgitter im Nabenbereich, wobei eine äußere Gehäusewand in der Fig. 1 nicht dargestellt ist. Auf der Seitenwand 1 ist eine Vielzahl von Schaufeln 20 mit einer Eintrittskante 2, einer Austrittskante3, einer Druckseite 4 und einer Saugseite 5 in einer Umfangsrichtung U nebeneinander angeordnet. Zwischen benachbarten Schaufeln 20 befindet sich eine Schaufelpassage 8, durch welches Fluid in axialer Richtung X strömen kann.

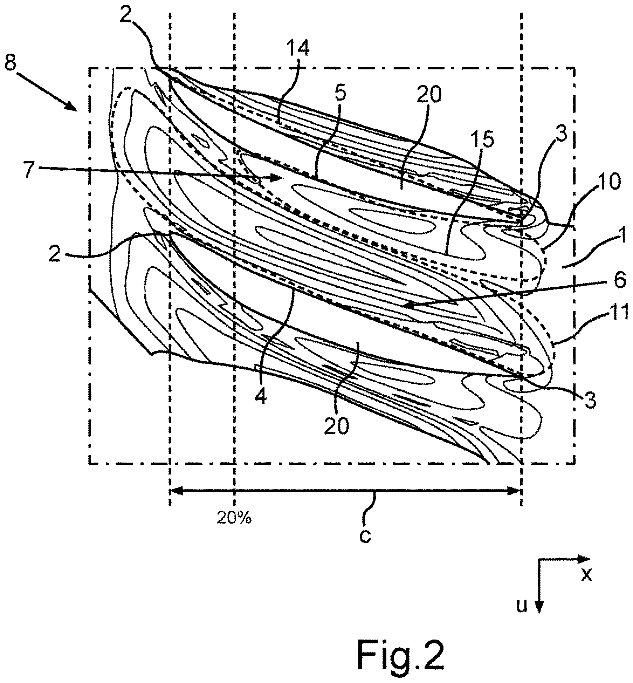

In der FIG. 2 ist ein Höhenliniendiagramm einer Konturierung einer Seitenwand 1 gemäß einem ersten Ausführungsbeispiel gezeigt, bei welchem Isolinien 15 gleicher Höhe der Erstreckung der Seitenwandkontur in die zur Seitenwand 1 orthogonalen Richtung dargestellt sind. Die Seitenwand 1 kann zwischen benachbarten Schaufeln 20 in einem Bereich 6 der Druckseite 4 eine eine Absenkung 11 aufweisen, sowie in einem Bereich 7 der Saugseite 5 eine erste Aufdickung10 aufweisen. Insbesondere kann es vorgesehen sein, dass die erste Aufdickung 10 erst ab zumindest 10 % der Profiltiefe c entfernt von der Eintrittskante 2 beginnt. Im gezeigten Ausführungsbeispiel beginnt die erste Aufdickung bei 20 % der Profiltiefe c.

Insbesondere ist gemäß diesem Ausführungsbeispiel die Erstreckung der Absenkung 11 größer ist als eine Erstreckung der ersten Aufdickung 10, insbesondere in axialer Richtung X, als auch in Umfangsrichtung U. Anhand der Anzahl der Isolinien 15 ist zudem erkennbar, dass eine maximale Tiefe der Absenkung 11 größer ist als eine maximale Höhe der ersten Aufdickung 10.

Die Absenkung 11 beginnt in diesem Beispiel stromauf der Eintrittskante 2 beginnt, etwa mit einem Abstand von 15 % einer Länge der Profiltiefe c stromauf von der Eintrittskante 2. Ebenso weist die Absenkung 11 eine maximale Breite in Umfangsrichtung U von zumindest 60 % einer Breite der Schaufelpassage 8 zwischen den benachbarten Schaufeln 20 in Umfangsrichtung U. Eine maximale Tiefe der Absenkung 11 ist hierbei etwa 40 % einer Breite der Schaufelpassage 8 von der Druckseite 4 entfernt, und liegt in etwa in einem Bereich von ca. 25 % bis 60 % der Profiltiefe c.

Die Absenkung 11 und die erste Aufdickung 10 können insbesondere direkt aneinander in der Schaufelpassage 8 angrenzen, sodass die Aufdickung in die Absenkung 10 fließend übergehen kann. Sowohl die Absenkung 11 als auch die erste Aufdickung 10 können sich im Wesentlichen länglich entlang der axialen Richtung X erstrecken. Im Wesentlichen ist hierbei derart zu verstehen, dass die Erstreckung in axialer Richtung X größer sein kann als die Erstreckung in Umfangsrichtung U.

Die Absenkung 11 und die erste Aufdickung 10 können in etwa auf axialer Position der Austrittskante 3, also bei etwa 100 % der Profiltiefe c enden, bzw. noch zumindest geringfügig stromab über die Austrittskante 3 hinausgehen.

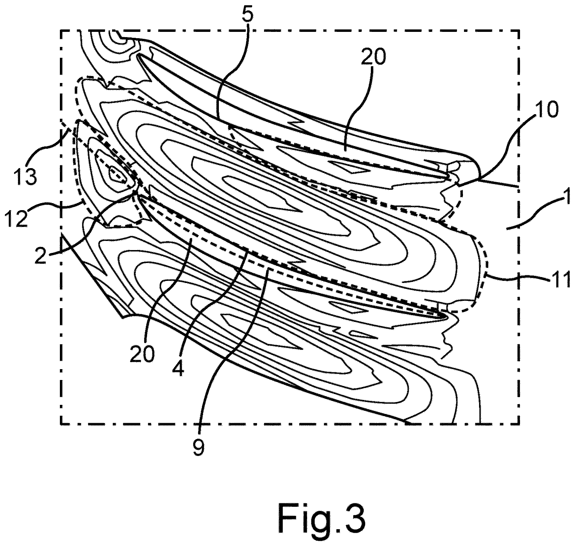

FIG. 3 zeigt ein Höhenliniendiagramm einer Konturierung einer Seitenwand 1 gemäß einem zweiten Ausführungsbeispiel. Im Vergleich zum ersten Beispiel ist die Erstreckung der Absenkung 11 noch weiter deutlich größer als die Erstreckung der ersten Aufdickung 10. Zusätzlich weist die Seitenwand 1 eine zweite Aufdickung 12 auf, welche stromauf der Eintrittskante 2 angeordnet ist. Ein Maximum der zweiten Aufdickung 12 kann im gezeigten Beispiel zumindest näherungsweise an einer gedachten Tangente 13 einer Schaufelskeletlinie 9 der Schaufel 20 angeordnet sein, bzw. an einer gedachten, stromaufwärtigen Verlängerung der Schaufelskeletlinie 9. Insbesondere in der Konstellation, dass die Absenkung 11 bereits stromauf der Eintrittskante 2 beginnt, kann die zweite Aufdickung 12 in diesem Beispiel zwischen zwei benachbarten Absenkungen 11 angeordnet sein.

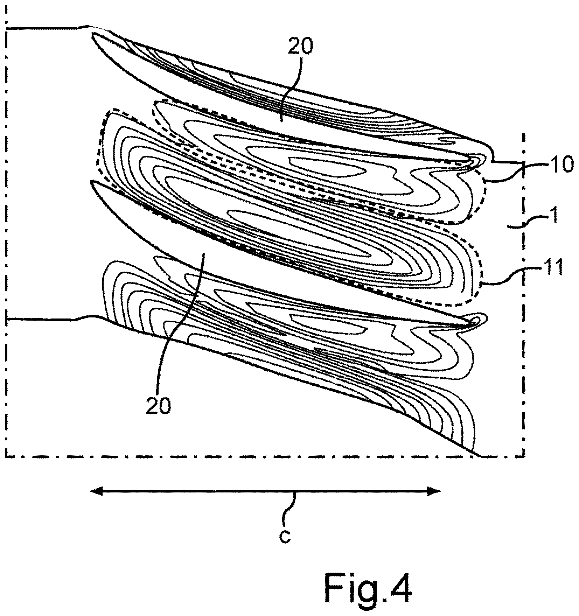

In der FIG. 4 ist ein Höhenliniendiagramm einer Konturierung einer Seitenwand 1 gemäß einem dritten Ausführungsbeispiel gezeigt. Die maximale Tiefe der Absenkung 11 kann hierbei deutlich größer sein als die maximale Höhe der ersten Aufdickung 10. Die Absenkung 11 kann hierbei in etwa ab 0 % der Profiltiefe c bzw. in etwa ab der axialen Position der Eintrittskante beginnen.

### Bezugszeichenliste:

- 1: Seitenwand
- 2: Eintrittskante
- 3: Austrittskante
- 4: Druckseite
- 5: Saugseite
- 6: Bereich der Druckseite der Seitenwand
- 7: Bereich der Saugseite der Seitenwand
- 8: Schaufelpassage
- 9: Skelettlinie
- 10: erste Aufdickung
- 11: Absenkung
- 12: zweite Aufdickung
- 13: Tangente
- 14: Profilsehne
- 15: Isolinien
- 20: Schaufel
- 21: Beschaufelung

- c: Profiltiefe
- U: Umfangsrichtung
- X: axiale Richtung

## Patentansprüche

1. Beschaufelung (21) für eine Turbomaschine, aufweisend eine Seitenwand (1), an welcher eine Vielzahl von Schaufeln nebeneinander ausgebildet sind, wobei jeweils eine Schaufel (20) der Vielzahl von Schaufeln eine Eintrittskante (2), eine Austrittskante (3), eine Profiltiefe (c), eine Druckseite (4) und eine Saugseite (5) aufweist, wobei die Seitenwand (1) zwischen benachbarten Schaufeln (20) in einem Bereich (6) der Druckseite (4) eine Absenkung (11) und in einem Bereich (7) der Saugseite (5) eine erste Aufdickung (10) aufweist,
**dadurch gekennzeichnet, dass**
die erste Aufdickung (10) erst ab zumindest 10 % der Profiltiefe (c) entfernt von der Eintrittskante (2) beginnt.

2. Beschaufelung (21) nach Anspruch 1, **dadurch gekennzeichnet, dass**
eine Erstreckung der Absenkung (11) größer ist als eine Erstreckung der ersten Aufdickung (10).

3. Beschaufelung (21) nach Anspruch 1 oder 2, **dadurch gekennzeichnet, dass**
eine maximale Tiefe der Absenkung (11) größer ist als eine maximale Höhe der ersten Aufdickung (10).

4. Beschaufelung (21) nach einem der vorherigen Ansprüche, **dadurch gekennzeichnet, dass**
die Absenkung (11) stromauf der Eintrittskante (2) beginnt, vorzugsweise zumindest 10 % einer Länge der Profiltiefe (c) stromauf der Eintrittskante (2).

5. Beschaufelung (21) nach einem der Ansprüche 1 bis 3, **dadurch gekennzeichnet, dass**
die Absenkung (11) ab 0 % der Profiltiefe (c) oder stromab der Eintrittskante (2) beginnt.

6. Beschaufelung (21) nach einem der Ansprüche 1 bis 3, **dadurch gekennzeichnet, dass**
eine maximale Breite der Absenkung (11) zumindest 60 % einer Breite einer Schaufelpassage (8) zwischen benachbarten Schaufeln (20) entspricht.

7. Beschaufelung (21) nach einem der vorherigen Ansprüche, **dadurch gekennzeichnet, dass**
die Seitenwand (1) eine zweite Aufdickung (12) aufweist, welche stromauf der Eintrittskante (2) angeordnet ist.

8. Beschaufelung (21) nach Anspruch 4 und 7, **dadurch gekennzeichnet, dass**
die zweite Aufdickung (12) zwischen zwei benachbarten Absenkungen (11) angeordnet ist.

9. Beschaufelung (21) nach Anspruch 7 und 8, **dadurch gekennzeichnet, dass**
ein Maximum der zweiten Aufdickung (12) zumindest näherungsweise an einer gedachten Tangente (13) einer Schaufelskeletlinie (9) der Schaufel (20) angeordnet ist.

10. Beschaufelung (21) nach einem der vorherigen Ansprüche, **dadurch gekennzeichnet, dass** eine maximale Tiefe der Absenkung (11) zwischen 20 % und 60 % einer Breite einer Schaufelpassage (8) zwischen benachbarten Schaufeln (20) von der Druckseite (4) entfernt ist.

11. Beschaufelung (21) nach einem der vorherigen Ansprüche, **dadurch gekennzeichnet, dass** eine maximale Tiefe der Absenkung (11) in einem Bereich von 20 % bis 65 % der Profiltiefe (c) liegt.

12. Beschaufelung (21) nach einem der vorherigen Ansprüche, **dadurch gekennzeichnet, dass** die Vielzahl von Schaufeln (20) Rotoren oder Statoren sind.

13. Beschaufelung (21) nach einem der vorherigen Ansprüche, **dadurch gekennzeichnet, dass** die Vielzahl von Schaufeln (20) Verdichterschaufeln oder Turbinenschaufeln sind.

14. Beschaufelung (21) nach einem der vorherigen Ansprüche, **dadurch gekennzeichnet, dass** die Vielzahl von Schaufeln (20) Schaufelfillets aufweisen.

15. Turbomaschine, aufweisend eine Beschaufelung (21) nach einem der vorhergehenden Ansprüche.
